**Europäisches Patentamt**

**European Patent Office**

**Office européen des brevets**

(19)

(11) Publication number: **0 063 612**
A1

# EUROPEAN PATENT APPLICATION

(12)

published in accordance with Art. 158(3) EPC

(21) Application number: 81902960.4

(22) Date of filing: 28.10.81

Data of the international application taken as a basis:

(86) International application number:
PCT/JP 81/00307

(87) International publication number:
WO 82/01598 (13.05.82 82/12)

(51) Int. Cl.³: **G 05 B 19/02**

(30) Priority: 30.10.80 JP 152875/80

(43) Date of publication of application: 03.11.82
Bulletin 82/44

(84) Designated Contracting States: **CH DE FR GB LI**

(71) Applicant: **Fanuc Ltd, 5-1, Asahigaoka, 3-chome, Hino-shi, Tokyo 191 (JP)**

(72) Inventor: **ISOBE, Shinichi, 516, Hinodai-hights 1-1, Hinodai 1-chome, Hino-shi Tokyo 191 (JP)**
Inventor: **YONEKURA, Mikio, Fujitsu-Fanuc-Hino-Ryo 3-27, Tamadaira, Hino-shi Tokyo 191 (JP)**

(74) Representative: **Fane, Christopher Robin King et al, HASELTINE LAKE & CO. Hazlitt House 28 Southampton Buildings Chancery Lane, London, WC2A 1AT (GB)**

(54) **NUMERICAL CONTROL UNIT.**

(57) A numerical control unit which is able to perform a bit-operation by executing instructions provided for a usual microprocessor so as to shorten a processing time. A read-cycle is provided with a selector (SE1) to output the data of a special bit in the data read out from a random access memory (RAM) or an input device onto a special bit line in the data bus (BUS1) of a processor (CPU), which makes it possible to read out bit by bit, and a write-cycle is provided with a memory means (RE) for temporarily storing the data of the address designated by the random access memory (RAM) or the output device, and selectors (SE2 to SE17) for applying the data output from the special bit-line of the data bus (BUS1) of the processor (CPU) onto a special bit of the designated address of the random access memory (RAM) or the output device and simultaneously for applying the data stored in the memory means (RE) onto other bits, which makes it possible to write-in bit by bit.

S P E C I F I C A T I O N

NUMERICAL CONTROL EQUIPMENT

TECHNOLOGICAL FIELD

The present invention relates to numerical control equipment which is designed so that a bit operation can be executed by executing an instruction provided in an ordinary microprocessor, thereby to permit the reduction of the processing time.

TECHNOLOGICAL BACKGROUND

In numerical control equipment, especially in a programmable controller, it is necessary to carry out a logical operation and a transfer in a unit of bits (hereinafter referred to as the bit operation). But a microprocessor employed in the programmable controller usually has only instructions in a unit of bytes or words, and hence requires a plurality of instructions when to perform the bit operation. Accordinlgy, in conventional numerical control equipment, the reduction of the processing time is difficult.

DISCLOSURE OF THE INVENTION

The present invention is intended to overcome such a defect as mentioned above, and has for its object to enable the bit operation by executing an instruction with which an ordinary microprocessors is equipped, thereby reducing the processing time. Since the present invention is provided with a first selector for outputting on a specified bit line of a data bus of a processor data of a specified bit in data from a random access memory or input device in a read cycle, storage means for temporarily storing data of a designated address of the random access memory or an output device in a write cycle, and a second selector for applying the data provided on the specified bit line of the data bus of the processor to a specified bit of the random access memory or output device and applying stored data of the storage means to the other bits, the bit operation can be performed by executing an instruction provided in an ordinary microprocessor.

BRIEF DESCRIPTION OF THE DRAWINGS

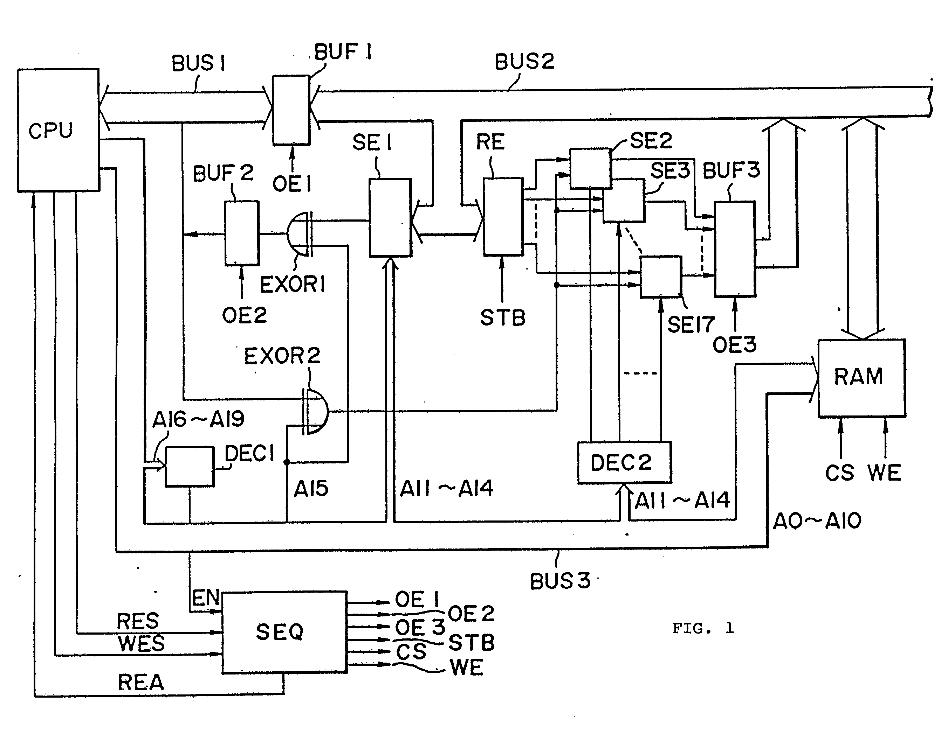

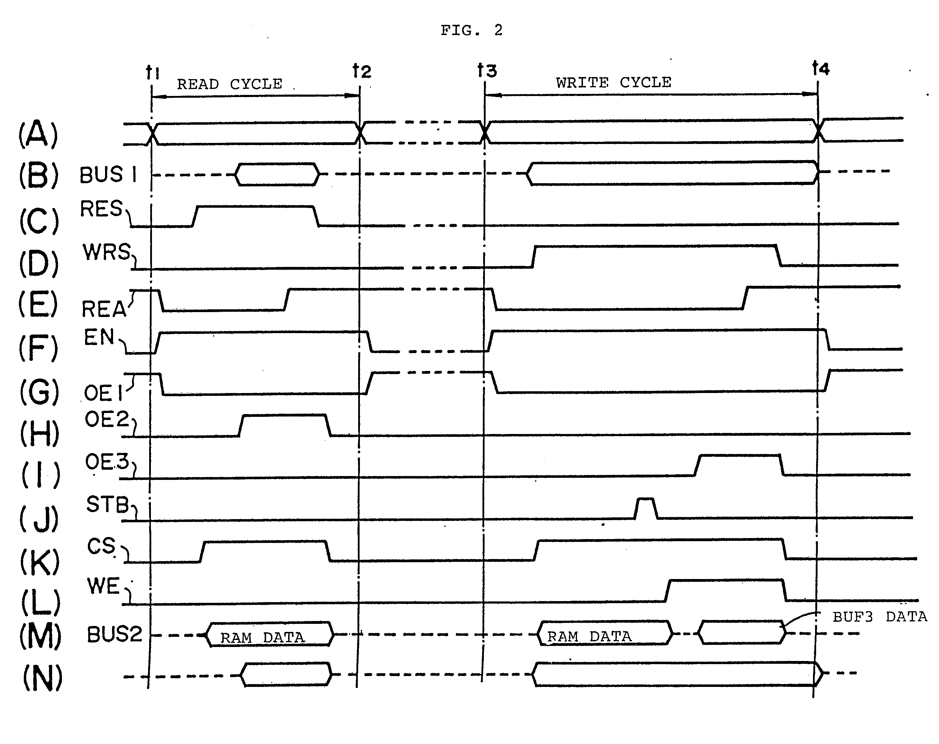

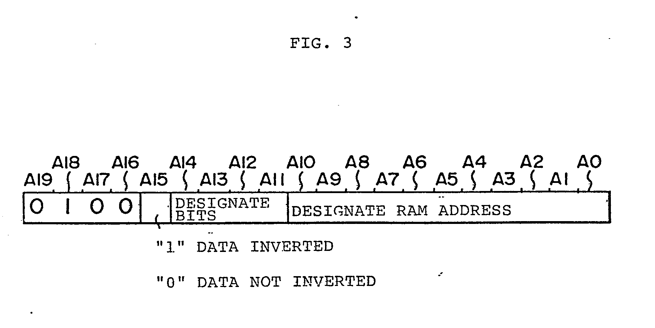

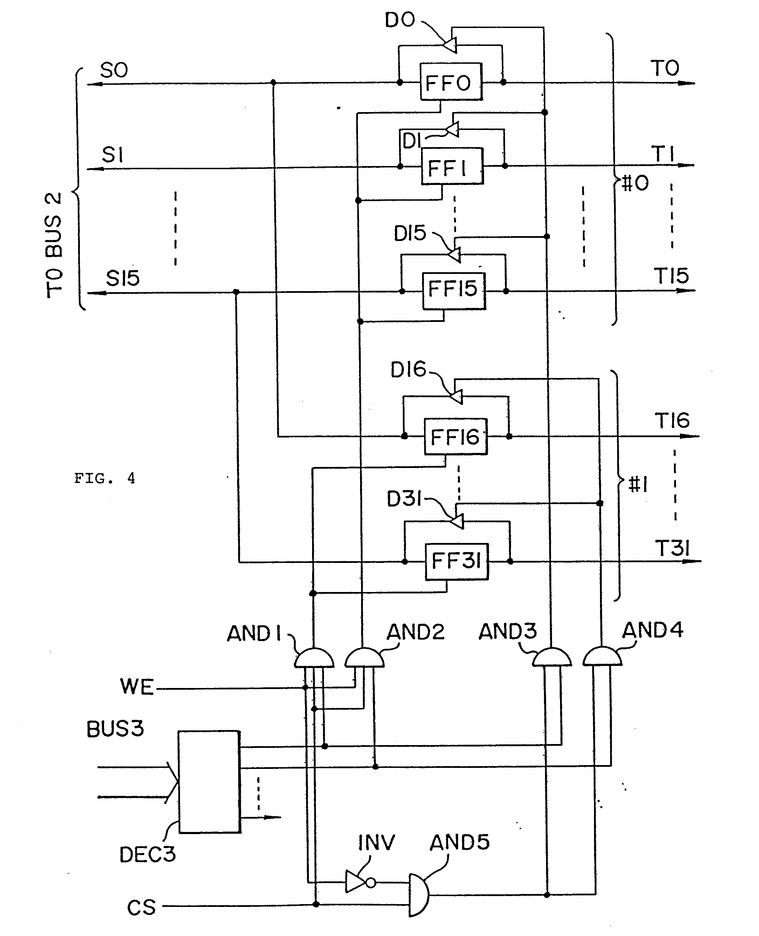

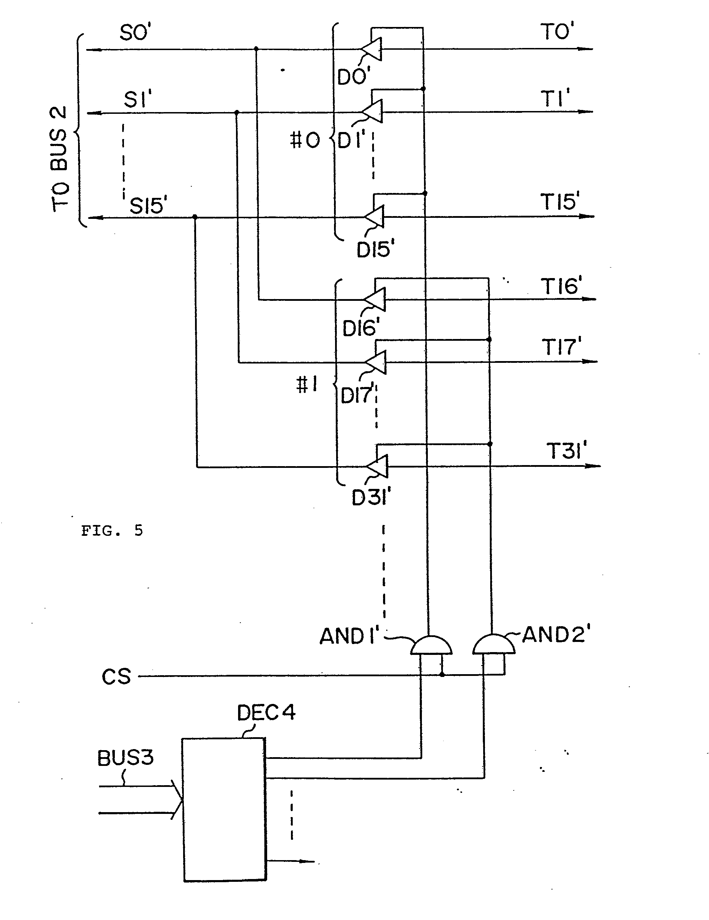

Fig. 1 is a block diagram showing an embodiment of the present invention; Figs. 2(A) to (N) are diagrams explanatory of the operation of the embodiment depicted in Fig. 1; Fig. 3 is a diagram showing an address format; and Figs. 4 and 5 are block diagrams illustrating different embodiments of the present invention.

PREFERRED EMBODIMENTS OF THE INVENTION

For a detailed description of the present invention, its embodiments will hereinafter be described in detail.

Reference character CPU indicates a processor, BUS1 and BUS2 data buses, BUS3 an address bus, BUF1 to BUF3 buffers, DEC1 to DEC4 decoders, EXOR1 and EXOR2 exclusive OR gates, each of which yields an output "1" or "0" depending on whether the inputs thereto are different or the same, RE a register, BUS1 to BUS3 address buses, SE1 selector for selecting one of 16 bits, SE2 to SE17 selectors, each selecting one of two bits, and SEQ a sequencer. Fig. 2(A) to (N) are explanatory of the operation of the embodiment of Fig. 1. Fig. 3 is a diagram showing an address format. Only when high-order four bits A19 to A16 assume a specific bit pattern ("0", "1", "0", "0" in this embodiment), the bit operation takes place; low-order 11 bits A0 to A10 address the memory RAM; address bits A11 to A14 designate specific ones of 16 bits of data addressed by the low-order 11 bits; and an address bit A15 indicates whether to invert the data designated by the address bits A0 to A14.

A description will be given first of the operation of the processor CPU for executing an instruction which requires reading out a specified bit of a specified address of the memory RAM (This operation will hereinafter be referred to as the read cycle). As shown in Fig. 2, when an address with its high-order four bits having a bit pattern "0", "1", "0", "0" is provided on the address bus BUS3 at a time $t_1$, the decoder DEC1 decodes it and makes an enable signal EN "1" as shown in Fig. 2(F). When the enable signal EN becomes "1", the sequencer SEQ makes a ready signal REA "0" as shown in Fig. 2(E) and, at the same time, makes an output enable signal OE1 "0" to disenable the buffer BUF1. The processor CPU makes a read strobe RES "1" as shown in Fig. 2(C), by which the sequencer SEQ makes "1" a chip select signal CS to be applied to the memory RAM as shown in Fig. 2(K).

When the chip select signal CS is "1" and a write signal WE is "0", data stored at an address designated by the address bits A0 to A11 is read out from the memory RAM, and when the chip select signal CS and the write signal WE are both "1", data is written in the memory. When the chip select signal CS is "0", the output becomes a high impedance. Accordingly, when the chip select signal CS becomes "1" as shown in Fig. 2(K), the memory RAM provides on the data bus BUS2 the data stored at the address designated by the address bits A0 to A10, and this data is applied to the selector SE1. The selector SE1 has incorporated therein a decoder (not shown) for interpreting the address bits A11 to A14 and, based on the interpretation result, selects any one of the bits on the data bus BUS2 and applies it via the exclusive OR gate EXRO to the buffer BUF2. Accordingly, the buffer BUF2 is supplied with those specified bits of the address disgnated by the address bits A0 to A10 which are designated by the address bits A11 to A14. And, when an output enable signal OE2 applied to the buffer BUF2 from the sequencer SEQ becomes "1" as shown in Fig. 2(H), the buffer provides data at such timing as shown in Fig. 2(N), and this data is outputted to a specified bit of the data bus BUS2, a bit 15 in this embodiment, at the timing shown in Fig. 2(B). And, the sequencer SEQ makes the ready signal REA "1" as shown in Fig. 2(E), by which the processor CPU reads out the data and stores it, for instance, in an accumulator (not shown) in corporated therein. In this case, since the bits on the data bus BUS2 are floating except the bit 15, only the bit 15 is handled as a significant bit. After completion of the data readout, the processor CPU makes the read strobe RES "0". And, when the address changes at a time $t_2$ to such a form that the bit pattern of the high-order four bits A19 to A16 is not "0" , "1", "0", "0" as shown in Fig. 2(A), the decoder DEC1 makes the enable signal EN "0" to stop the operation of the sequencer SEQ, finishing the read cycle. Incidentally, the exclusive OR gate EXOR1 is supplied with the address bit A15 and when the address bit A15 is "1", the exclusive OR gate inverts the data from the selector SE1 and applies it to the buffer BUF2, and provides the output data as it is from the selector SE1 to the buffer BUF2 when the address bit A15 is "0".

Next, a description will be given of the operation for writing data in a specified bit of a specified address of the memory RAM (This operation will hereinafter be referred to as the write cycle). When an address with the high-order four bits A19 to A16 having the bit pattern "0", "1", "0", "0" is provided at a time $t_3$ as shown in Fig. 2(A), the decoder DEC1 makes the enable signal EN "1" as shown in Fig.

2(F) as is the case with the foregoing, thereby to start the sequencer SEQ, by which the sequencer SEQ makes the ready signal REA '0" as shown in Fig. 2(E) and, at the same time, makes the output enable signal OE1 "0", disenabling the buffer BUF1. The processor CPU outputs to the bit 15 of the data bus BUS1 the data which is to be written in the specified bit of the specified address of the memory RAM, as shown in Fig. 2(B), and provides the data via the exclusive OR gate EXOR to the selectors SE2 to SE17 and, at the same time, makes the write strobe WRS "1" as depicted in Fig. 2(D). By this, the sequencer SEQ makes the chip select signal CS to the memory RAM"1" as shown in Fig. 2(K). At this time, since the write signal WE depicted in Fig. 2(L) is "0", the memory RAM provides on the data bus BUS2 the data stored therein at the address designated by the address bits A0 to A10 as shown in Fig. 2(M) and the data is applied to the register RE.

The register RE sets the data read out from the memory RAM at the timing at which a strobe signal STB from the sequencer SEQ, shown in fig. 2(J), became "1", and provides the data to the 16 selectors SE2 to SE17. The selectors SE2 to SE17 select either one of the data from the register RE and the data from the exclusive OR gate EXOR2 and provides the selected data to the buffer BUF3. in this case, only one selector designated by the decoder DEC2, which

0063612

interprets the address bits All to Al4 for designating bit positions, supplies the buffer BUF3 with the data provided via the exclusive OR gate EXOR2, and the other selectors applies the output data from the register RE to the buffer BUF3. And the buffer BUF3 outputs the data from the selectors SE2 to SE17 as shown in Fig. 2(M) when an output enable signal OE3 from the sequencer SEQ, shown in fig. 2(I), becomes "1". Incidentally, since the write signal shown in Fig. 2(L) becomes "1" before the output enable signal OE3 becomes "1" after the strobe signal STB becomes "0", the memory RAM is ready for write at the moment when the data is provided from the buffer BUF3.

Accordingly, when the output enable signal OE3 becomes "1" and the buffer BUF3 provides the data, the data is written at the address designated by the address bits A0 to Al0. In this case, since the data provided form the buffer BUF3 is such that only those of the data read out from the memory RAM which are designated by the address bits All to Al4 are replaced with the data provided from the processor CPU to the bit 15 of the data bus BUS1, the data of only those specified bits of the address designated by the address bits A0 to Al0 which are designated by the address bits All to Al4 is rewritten.

Thereafter, the sequencer SEQ makes the ready signal REA "1" as shown in Fig. 2(E), by which the processor CPU makes the write strobe WRS "0" as shown in Fig. 2(D). When the write strobe WRS becomes "0", the output enable signal OE3, the chip select signal CS and the write signal WE become "0" as depicted in Figs. 2(I), (K) and (L). And, when the address changes at a time $t_4$ to such a form that the bit pattern of its high-order four bits A19 to A16 is not "0", "1", "0", "0" as shown in Fig. 2(A), the decoder DE1 makes the enable signal EN "0" to stop the operation of the sequencer SEQ, completing the write cycle. Incidentally, the exclusive OR gate EXOR2 is supplied with the address bit A15 as is the case with the exclusive OR gate EXOR1, and when the address bit A15 is "1", the data to the selectors SE2 to SE17 are inverted but when the abovesaid address bit is "0", the data are not inverted.

Since data written in a specified bit of a specified address of the memory RAM can be read out or data can be written in a specified bit of the memory RAM by one instruction as described in the foregoing, the processing speed can be increased.

While in the foregoing embodiment the random access memory RAM is used, it is possible to write data bit by bit by the same write cycle as described above also in the case of using an output device such as, for instance, shown in Fig. 4.

In Fig. 4, reference characters D0 to D31 indicate drivers, FF0 to FF31 flip-flops, AND1 to AND5 gates, INV an inverter, DEC3 a decoder having connected thereto the address bus BUS3 shown in Fig. 1, S0 to S15 signal lines connected to the data bus BUS2 shown in Fig. 1, and T0 to T31 signal lines connected to relays or the like (not shown).

This output device is constituted using a plurality of output elements, each formed by one driver and one flip-flop. An address #0 is given to a group of output elements made up of the drivers D0 to D15 and the flip-flops FF0 to FF15, and an address #1 is given to a group of output elements made up of the drivers D16 to D31 and the flip-flops FF16 to FF31. In Fig. 4, only two groups are shown, but many other groups are provided and they are given addresses, respectively.

The flip-flops FF0 to FF15 and FF16 to FF31 are to set data from the bus BUS2 when the write signal WE applied to them via the AND gates AND1 and AND2, respectively, changes from "1" to "0"; the drivers D0 to D15 and D16 to D31 are to output the data of the flip-flops FF0 to FF15 and FF16 to FF31 on the data bus BUS2 only when the chip select signal CS applied to them via the AND gates AND3 and AND4, respectively, is "1"; and the decoder DEC3 is to interpret the address bits A0 to A10 and turn ON the AND gates AND1 to AND4 through which the write signal WE and the chip select signal CS are provided to the flip-flop and the driver in the address indicated by the address bits

A0 to A10. Accordingly, the data of only a specified flip-
flop in the designated address can be rewritten in the same
manner as described previously.

Also in the case of using an input device shown in
Fig. 5, it is possible to read out data bit by bit with the
same read cycle as described previously. In Fig. 5, reference
characters D0' to D31' indicate drivers, AND1' and AND2'
AND gates, DEC4 a decoder for decoding the low-order 11 bits
A0 to A10 of the address bus BUS3 shown in Fig. 1, S0' to
S15' signal lines connected to the data bus BUS2 shown in
Fig. 1, and T0' to T31' signal lines connected to relay
contacts (not shown).

In this input devie, the drivers are grouped by steps
of 16, and an address #1 is given to the group of the drivers
D0' to D15' and an address #1 the group of the drivers D16'
to D31'; namely, each group is given an address. In Fig. 5,
only two groups are shown, but many other groups are provided
and given addresses, respectively. The drivers D0' to D15'
and D16' to D31' are to output the state of the relays (not
shown) connected thereto via the signal lines T0' to T15'
and T16' to T31" on the data bus BUS2 shown in Fig. 1 only
when the chip select signal CS applied to the drivers via
the AND gates AND1' and AND2', respectively, from the
sequencer SEQ shown in Fig. 1; and the decoder DEC4 is to
interpret the address bits A0 to A10 and turn ON the AND gates AND1' and AND2' through which the chip select signal CS is applied to the driver in the address designated by the address bits A0 to A10. Accordingly, the one-bit-unit readout can be achieved with the same read cycle as described previously.

As has been described in the foregoing, according to the present invention, there are provided the selector SE1 for outputting data read out from a random access memory or input device on a specified bit line of the data bus BUS1 of a processor in the read cycle, the register RE or like storage means for temporarily storing data of a designated address of the random access memory or output device in the write cycle and the selectors SE2 to SE17 for applying the data outputted on the specified bit line of the data bus from the processor to a specified bit of the designated address of the random access memory or output device. Accordingly, by executing an instruction provided in an ordinary microprocessor, the bit operation can be carried out; therefore, the present invention possesses the advantage that the processing time for numerical control can be reduced.

0063612

CLAIM

Numerical control equipment characterized by the provision of a first selector for outputting on a specified bit line of a data bus of a processor data of only a specified bit in data read out from a random access memory or input device in a read cycle; storage means for temporarily storing data of a designated address of the random access memory or an output device in a write cycle; and a second selector for applying the data provided on the specified bit line of the data bus of the processor to a specified bit of a designated address of the random access memory or output device and applying stored data of the storage means to the other bits.

FIG. 1

FIG. 2

3/5

FIG. 3

| AI9 | AI8 | AI7 | AI6 | AI5 | AI4 | AI3 | AI2 | AII | AI0 | A9 | A8 | A7 | A6 | A5 | A4 | A3 | A2 | AI | A0 |

| 0 | I | 0 | 0 | DESIGNATE BITS | DESIGNATE RAM ADDRESS |

"1" DATA INVERTED

"0" DATA NOT INVERTED

FIG. 4

FIG. 5

**I. CLASSIFICATION OF SUBJECT MATTER** (if several classification symbols apply, indicate all) 3

According to International Patent Classification (IPC) or to both National Classification and IPC

Int. Cl.³ G05B19/02

**II. FIELDS SEARCHED**

| Minimum Documentation Searched 4 | |
|---|---|
| Classification System I | Classification Symbols |
| Int. Cl.³ | G05B15/00, G05B19/00 |

Documentation Searched other than Minimum Documentation
to the Extent that such Documents are Included in the Fields Searched 6

| | |
|---|---|
| Jitsuyo Shinan Koho | 1926 – 1981 |
| Kokai Jitsuyo Shinan Koho | 1971 – 1981 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| X | JP, A, 55-95109 (Westinghouse Electric Corporation) 1980-7-19, Page 11, column 41 to page 13, column 48 | |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search 2 | Date of Mailing of this International Search Report 2 |
|---|---|
| December 7, 1981 (07.12.81) | December 21, 1981 (21.12.81) |
| International Searching Authority 1 | Signature of Authorized Officer 20 |
| Japanese Patent Office | |

Form PCT/ISA/210 (second sheet) (October 1977)